Europäisches Patentamt

European Patent Office

Office européen des brevets

(11) Publication number: 0 504 795 A2

# EUROPEAN PATENT APPLICATION

(21) Application number: 92104576.1

(22) Date of filing: 17.03.92

(51) Int. Cl.5: H04Q 7/00, H04Q 7/02, H04Q 7/04

(30) Priority: 19.03.91 JP 54721/91
19.03.91 JP 54719/91

(43) Date of publication of application:
23.09.92 Bulletin 92/39

(84) Designated Contracting States:
DE FR GB SE

(71) Applicant: FUJITSU LIMITED
1015, Kamikodanaka Nakahara-ku
Kawasaki-shi Kanagawa 211(JP)

(72) Inventor: Oguchi, Takuro, c/o Fujitsu Limited
1015, Kamikodanaka, Nakahara-ku
Kawasaki-shi, Kanagawa, 211(JP)
Inventor: Asahara, Masaru, c/o Fujitsu Limited
1015, Kamikodanaka, Nakahara-ku
Kawasaki-shi, Kanagawa, 211(JP)
Inventor: Sasaki, Shunroku, c/o Fujitsu
Limited
1015, Kamikodanaka, Nakahara-ku
Kawasaki-shi, Kanagawa, 211(JP)

(74) Representative: Lehn, Werner, Dipl.-Ing. et al
Hoffmann, Eitle & Partner Patentanwälte
Arabellastrasse 4
W-8000 München 81(DE)

(54) Communication system having portable station.

(57) A communication system includes a portable telephone system (100A) including at least a radio base station (12a-j), at least a first portable station (13a) which communicates with the radio base station, a switching system (10a) which is coupled to each radio base station, and a line control unit (11a) which is coupled to the switching system to control an operation of the switching system, a cordless telephone (15, 13k) including at least a parent station (15) and at least a second portable station (13k) which communicates with the parent station, and a public switched telephone network (104) which couples the switching system of the Portable telephone system to the parent station of the cordless telephone. The parent station (15) uses with respect to the second portable station (13k) a common air interface (CAI) which is identical to a predetermined common air interface (CAI) employed by each radio base station (12a-j) of the portable telephone system (100A), so that the parent station (15) is usable as a radio base station and the first portable station (13a) is compatible with the parent station.

*FIG.1*

## BACKGROUND OF THE INVENTION

The present invention generally relates to communication systems, and more particularly to a communication system in which a portable station of a cordless telephone can make a communication with a portable telephone system using a parent station of the cordless telephone.

Conventionally, in a portable telephone system, a plurality of radio base stations are coupled via switching systems and switched lines. A line control unit which corresponds to the switching system manages positions of registered portable stations. A telephone service is provided with respect to the portable station from within a service area of an arbitrary radio base station.

On the other hand, cordless telephones are popularly used in homes.

It is not always easy to regionally provide the radio base stations with a high density. However, if measures are taken so that a parent station of the cordless telephone can be used as the radio base station, it may be regarded that the utilization efficiency of the portable telephone system will greatly improve, and it would be highly desirable to realize such a system.

## SUMMARY OF THE INVENTION

Accordingly, it is a general object of the present invention to provide a novel and useful communication system in which the problems described above are eliminated.

Another and more specific object of the present invention is to provide a parent station of a cordless telephone which has a portable station which communicates with the parent station, comprising first means for transmitting and receiving information between the portable station, and second means, coupled to the first means and a public switched telephone network (PSTN), for dialing an arbitrary telephone number, where the first means uses with respect to the portable station a common air interface (CAI) which is identical to a predetermined common air interface (CAI) employed by a predetermined communication system which includes at least one radio base station and at least one portable station, so that the portable station of the predetermined communication system is compatible with the parent station. According to the parent station of the present invention, the utilization efficiency of the portable station is improved.

Still another object of the present invention is to provide a communication system comprising a portable telephone system including at least a radio base station, at least a first portable station which communicates with the radio base station, a switching system which is coupled to each radio base station, and a line control unit which is coupled to the switching system to control an operation of the switching system, a cordless telephone including at least a parent station, and at least a second portable station which communicates with the parent station, and a PSTN which couples the switching system of the portable telephone system to the parent station of the cordless telephone, where the parent station uses with respect to the second portable station a common air interface (CAI) which is identical to a predetermined common air interface (CAI) employed by each radio base station of the portable telephone system, so that the parent station is usable as a radio base station and the first portable station is compatible with the parent station. According to the communication system of the present invention, the utilization efficiency of the portable station is improved.

A further object of the present invention is to provide a communication system comprising a first portable telephone system including at least a first radio base station, at least a first portable station which communicates with the first radio base station, a first switching system which is coupled to each first radio base station, and a first line control unit which is coupled to the first switching system to control an operation of the first switching system, a second portable telephone system including at least a second radio base station, at least a second portable station which communicates with the second radio base station, a second switching system which is coupled to each second radio base station, and a second line control unit which is coupled to the second switching system to control an operation of the second switching system, and a PSTN which couples the first and second switching systems of the first and second portable telephone systems, where the second radio base station includes means for receiving and transmitting a personal identification number which is assigned to the first portable station of the first portable telephone system from the first portable station and to the PSTN. According to the communication system of the present invention, the utilization efficiency of the portable station is improved, and the first portable station originally registered for use in the first portable telephone system may be used in the second portable telephone system. In addition, the accounting information related to the charges in respect of the calls made from the first portable station which is used in the second portable telephone system can be transferred to the first line control unit of the first portable telephone system from the second line control unit of the second portable telephone system.

Other objects and further features of the present invention will be apparent from the following detailed description when read in conjunction with the accompanying drawings.

## BRIEF DESCRIPTION OF THE DRAWINGS

FIG.1 is a system block diagram for explaining the operating principle of a first embodiment of a communication system according to the present invention;

FIG.2 is a system block diagram showing the first embodiment of the communication system according to the present invention;

FIG.3 is a system block diagram showing an embodiment of a parent station used in the first embodiment;

FIG.4 is a system block diagram showing an embodiment of a portable station used in the first embodiment;

FIG.5 is a system block diagram for explaining the operating principle of a second embodiment of the communication system according to the present invention;

FIG.6 is a system block diagram for explaining the operation of the second embodiment when a portable station which is originally registered for use in a first portable telephone system is used in a second portable telephone system;

FIG.7 is a system block diagram showing an embodiment of a line control unit of the second embodiment together with a part of a switching system;

FIG.8 is a system block diagram for explaining the operation of the second embodiment when a registered user of the first portable telephone system borrows a portable station within the second portable telephone system;

FIG.9 is a system block diagram for explaining methods of inputting a PID number when borrowing the portable station within the second portable telephone system;

FIG.10 is a system block diagram for explaining the operation of a third embodiment of the communication system according to the present invention; and

FIG.11 is a system block diagram showing an essential part of the third embodiment.

## DESCRIPTION OF THE PREFERRED EMBODIMENTS

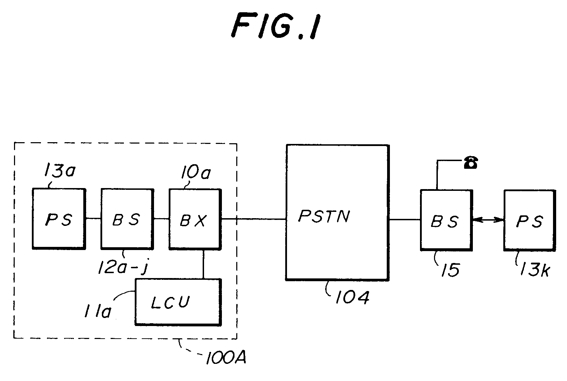

First, a description will be given of the operating principle of a first embodiment of a communication system according to the present invention, by referring to FIG.1.

FIG.1 shows a portable telephone system 100A which is connected to a public switched telephone network (PSTN) 104. A portable station 13k of a portable telephone is coupled to the PSTN 104 via a parent station 15 of the portable telephone. The portable telephone system 100A includes at least a switching system 10a which is connected to the PSTN 104, a line control unit 11a, a radio base station 12a-j and a portable station 13a.

In this embodiment, measures are taken so that the parent station 15 of the cordless telephone can operate similarly to the radio base station 12a-j. In other words, a so-called common air interface (CAI) is provided between the radio base station 12a-j and the portable station 13a, and the parent station 15 of the cordless telephone is provided with the same CAI so that the portable station 13k can be connected.

The line control unit 11a manages information such as the position of the portable station 13a within the service area of the radio base station 12a-j. When the portable station 13a is called, the portable station 13a is called via the radio base station 12a-j.

Because the parent station 15 of the cordless telephone is provided with the CAI, the portable station 13k can request a telephone service by notifying its personal identification (PID) number to the parent station 15. In other words, when the parent station 15 receives the PID number and the request for the telephone service, the parent station 15 transmits (a) the telephone number of this parent station 15 and (b) the PID number of the portable station 13k to the line control unit 11a of the portable telephone system 100A via the PSTN 104.

Accordingly, if the portable station 13k is already registered in the portable telephone system 100A, the line control unit 11a stores information indicating that the portable station 13k can be called by the telephone number of the parent station 15 into a table which stores the locations of the portable stations. Thereafter, the call from the portable station 13k and the call with respect to the portable station 13k are managed via the parent station 15.

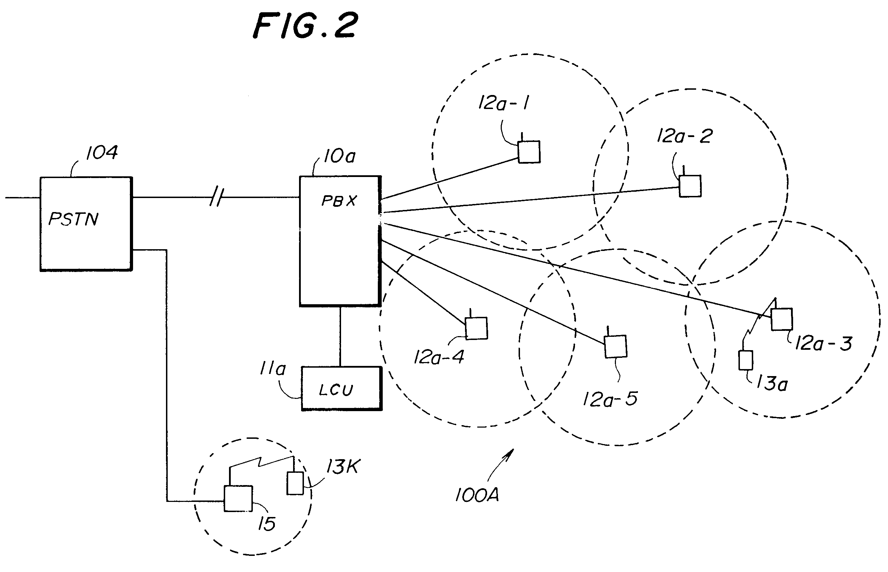

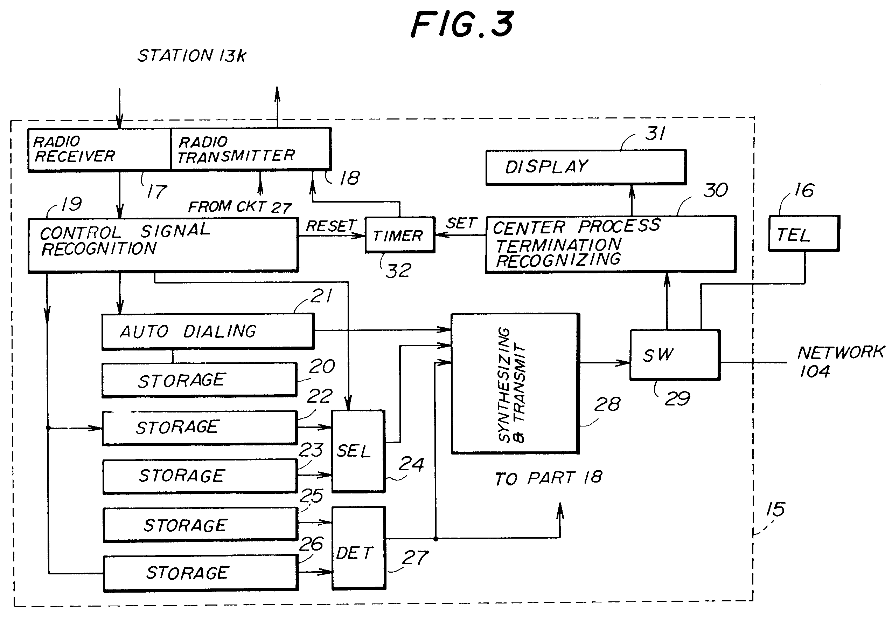

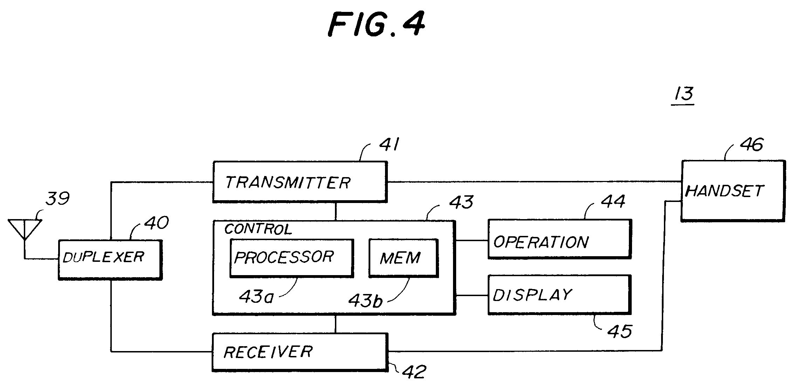

Next, a more detailed description will be given of the first embodiment, by referring to FIGS.2 through 4. FIG.2 shows the first embodiment, FIG.3 shows an embodiment of a parent station used in the first embodiment, and FIG.4 shows an embodiment of a portable station used in the first embodiment. In FIG.2, those parts which are the same as those corresponding parts in FIG.1 are designated by the same reference numerals, and a description thereof will be omitted.

In this embodiment, the portable telephone system 100A is used in one floor of a building, for example, and the switching system 10a is a private branch exchange. Each of the radio base stations 12a-1 through 12a-5 have a service area indicated by a dotted line, and it is assumed for the sake of convenience that the portable station 13a is used in the service area of the radio base station 12a-3.

The parent station 15 shown in FIG.3 includes a radio receiver part 17, a radio transmitter part 18, a control signal recognition part 19, an automatic dialing part 21, storages 20, 22, 23, 25 and 26, a selection circuit 24, a match detection circuit 27, a synthesizing and transmitting part 28, a switching circuit 29, a center process termination recognizing part 30, a display part 31, and a timer 32 which are connected as shown. In this embodiment, the parent station 15 is provided with a telephone set 16 which is connected to the switching circuit 29.

The signal transmission and reception between the portable station 13k and the parent station 15 is made via the radio receiver part 17 and the radio transmitter part 18. The control signal recognizing part 19 recognizes control signals from the portable station 13k and distributes the control signals to the corresponding processes. The storage 20 stores the telephone number of the switching system 10a of the portable telephone system 100A. When a call is received from the portable station 13k, for example, the automatic dialing part 21 automatically dials the switching system 10a via the PSTN 104.

The storage 22 stores a registration request data for notifying the line control unit 11a when the control signal recognizing part 19 receives from the portable station 13k a request for a telephone service. The storage 23 stores a registration cancel data for cancelling the previous registration when no answer is received from the portable station 13k for a predetermined time or a request is received from the portable station 13k to cancel the registration. The selection circuit 24 selectively outputs the data stored in one of the storages 22 and 23 depending on the control signal which is received via the control signal recognizing part 19.

The storage 25 stores the PID number of the portable station 13k if the PID number of the portable station 13k which can receive the telephone service via the parent station 15 is to be registered. The storage 26 temporarily stores the PID number of the portable station 13k received via the radio receiver part 17 of the parent station 15. The match detection circuit 27 detects whether or not the PID numbers from the storages 25 and 26 match, and an output detection signal of the match detection circuit 27 is supplied to the synthesizing and transmitting part 28 and to the radio transmitter part 18.

The synthesizing and transmitting part 28 makes a transmission for the automatic dialing and synthesizes various transmitting data to the transmitting signal. The switching circuit 29 switches the signal from the synthesizing and transmitting part 28 and the signal from the telephone set 16 and supplies the switched signal to the PSTN 104. This switching circuit 29 also switches and transfers the signal from the PSTN 104 to the telephone set 16 or the radio transmitter part 18 via the center process termination recognizing part 30 and the timer 32.

When the telephone service registration request or the telephone service cancel request is received from the portable station 13k, the center process termination recognizing part 30 checks whether or not the request is confirmed in the line control unit 11a on the center side, that is, within the portable telephone system 100A. The result of the recognition made in the center process termination recognizing part 30 is displayed on the display part 31.

The timer 32 makes a call to the portable station 13k at a predetermined period, for example. This timer 32 is set when the registration request from the portable station 13k is accepted on the center side (that is, by the line control unit 10a within the portable telephone system 100A), and is restarted every time the timer 32 calls the portable station 13k. The timer 32 is reset so as to no longer call the portable station 13k when the registration cancel request is received at the control signal recognition part 19 and the selection circuit 24 is to be controlled to output the registration cancel data from the storage 23.

FIG.4 shows the portable station 13 which may be used as the portable stations 13a and 13k. The portable station 13 includes an antenna 39, an antenna duplexer 40, a transmitter part 41, a receiver part 42, a controller 43, an operation part 44, a display part 45 and a handset 46 which are connected as shown. The controller 43 includes a processor 43a and a memory 43b. The operation of the portable station 13 is basically the same as a known telephone set, but the signal transmission and reception are made via the transmitter part 41, the receiver part 42, the antenna duplexer 40 and the antenna 39. Hence, instead of transmitting and receiving signals via the telephone line, the signals are transmitted and received by radio via the antenna 39. For example, the operation part 44 includes a power switch, a ten-key, an on-hook key, an off-hook key and a volume adjusting key. In addition, the display part 45 may display the ON/OFF state of the power source, the field intensity, the telephone number and the like.

According to the first embodiment, the portable station 13a which is originally registered for use in the portable telephone system 100A cannot be used in another portable telephone system. However, it would be very convenient if it were possible to use the portable station 13a in other portable telephone systems. However, when the use of the portable station 13a is enabled in a service area of a portable telephone system other than the portable telephone system 100A, measures must be taken so that the accounting is correctly made with respect to the user who uses the portable station 13a and no erroneous charging will be made to another individual or the owner of the other portable telephone system.

According to the first embodiment, the portable station can receive the telephone service outside the portable telephone system in which the portable station is registered as a subscriber, using the parent station of the cordless telephone as a radio station. For this reason, the utilization efficiency of the portable station is greatly improved.

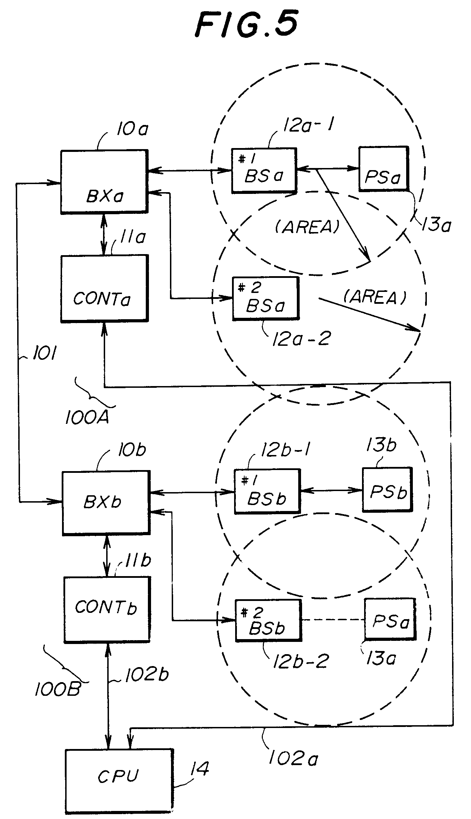

Next, a description will be given of the operating principle of a second embodiment of the communication system according to the present invention, by referring to FIG.5. This embodiment enables the use of a portable station which is originally registered for use in a first portable telephone system in a second portable telephone system. FIG.5 generally shows the second embodiment, and in FIG.5, those parts which are the same as those corresponding parts in FIG.1 are designated by the same reference numerals, and a description thereof will be omitted.

The switching system 10a, the line control unit 11a, the radio base stations 12a-1 and 12a-2, and the portable station 13a form the portable telephone system 100A shown in FIG.1. On the other hand, the switching system 10b, the line control unit 11b, the radio base stations 12b-1 and 12b-2, and the portable stations 13b form another portable telephone system 100B. A communication line 101 forms the PSTN 104. The service area of each radio base station 12 is indicated by a dotted line.

Communication lines 102a and 102b are used to communicate between an information processing part 14 and the line control units 11a and 11b of the respective portable telephone systems 100A and 100B. The information processing part 14 and the communication lines 102a and 102b are not essential to this embodiment.

Each portable station 13i has a personal identification (PID) number, where i = a, b, ... . In addition, the line control unit 11i within the portable telephone system 100i in which the portable station 13i is registered manages the service area of the radio base station 12i-j in which the portable station 13i is located, whether or not the portable station 13 is communicating, and accounting information, in correspondence with the PID number.

Regardless of the service area of the radio base station 12i-j in which the portable station 13i is located, the necessary line switching is carried out in the switching system 10i via the radio base station 12i-j and a communication can be made with another telephone. In other words, if the portable station 13a is located within the service area of the radio base station 12a-1 and the portable station 13a receives a call, for example, the line control unit 11a judges that the radio base station 12a-1 is to be used and connects the call to the portable station 13a. In addition, the line control unit 11a carries out the necessary accounting process.

The user of the portable station 13a which is originally registered in the portable telephone system 100A can receive the telephone service within the other portable telephone system 100B by registering the portable station 13a in the portable telephone system 100B or notifying that he wishes to receive the telephone service within the portable telephone system 100B. The portable station 13a can receive the telephone service within the service area of the radio base station 12b-2 in the portable telephone system 100B in the following manner.

If it is assumed for the sake of convenience that the portable station 13a is registered in the portable telephone system 100B so that the portable station 13a may receive the telephone service within the portable telephone system 100B, the call to the portable station 13a is notified to the line control unit 11b via the radio base station 12b-2 and the switching system 10b. The line control unit 11b registers information indicating that the portable station 13a is located within the service area of the radio base station 12b-2, and makes the necessary registration in the line control unit 11a within the portable telephone system 100A via the communication line 101.

When the portable station 13a makes a call with respect to a telephone within the portable telephone system 100A in this state, the line control unit 11b connects the switching systems 10b and 10a via the communication line 101, and the line control unit 11a makes the necessary connection within the portable telephone system 100A.

On the other hand, when a call is made to the portable station 13a from within the portable telephone system 100A, the line control unit 11a within the portable telephone system 100A connects the switching systems 10a and 10b via the communication line 101, and the line control unit 11b within the portable telephone system 100B makes the necessary connection within the portable telephone system 100A.

The user of the portable station 13a may not necessarily carry the portable station 13a into the portable telephone system 100B and receive the telephone service. In other words, the user of the portable station 13a may not carry the portable station 13a into the portable telephone system 100B but borrow the portable station 13b of another user within the portable telephone system 100B. In this case, the operation is basically the same as the case where the user of the portable station 13a carries the portable station 13a into the portable telephone system 100B. But in this case, the user who borrows the portable station 13b notifies this and registers thin information in the line control units 11b and 11a.

When borrowing the portable station 13b, the PID number of the user who originally uses the portable station 13a may or may not be the same as the PID number of the portable station 13a used within the portable telephone system 100A. If a different PID number is used, the line control unit 11a within the portable telephone system 100A collates this different PID number with the PID number of the portable station 13a assigned within the portable telephone system 100A. In either case, information related to the accounting which corresponds to the telephone service received within the portable telephone system 100B is notified from the line control unit 11b to the line control unit 11a. That is, the necessary accounting information is supplied to the line control unit 11a so that the line control unit 11a can collectively charge the user who originally uses the portable station 13a within the portable telephone system 100A.

When the information processing part 14 is coupled to the line control units 11a and 11b as shown in FIG.5, information related to present positions of all of the portable stations which are used within two or more portable telephone systems may be managed within the information processing part 14 by use of an internal memory of the information processing part 14 having a relatively large memory capacity. In this case, a change in the position of each of the portable stations usable in two or more portable telephone systems is notified to the information processing part 14. If the management information within the line control unit 11i and related to a certain portable station 13i is insufficient, the line control unit 11i may make an inquiry to the information processing part 14 via the communication line 102i. Hence, the line control unit 11i can transfer the call to the appropriate portable telephone system based on a reply to the inquiry received from the information processing part 14.

Next, a more detailed description will be given of the second embodiment.

In order to efficiently carry out the accounting process in the communication system which is made up of a plurality of portable telephone systems, the PID number may be processed according to one of the following methods, for example.

According to a first method, an office name (or number) and a subscriber name (or number), for example, are combined to form the PID number in relation to the portable telephone system to which the portable station belongs. When the line control unit 11b within the portable telephone system 100B notifies the accounting information to the line control unit 11a within the portable telephone system 100A, for example, only the part related to the office name is transmitted.

According to a second method, the PID number is related to a credit card of the user. For example, when the user of the portable station 13a uses the portable station 13a within the portable telephone system 100B or borrows a telephone within the portable telephone system 100B, the PID number is read from the credit card by a card reader.

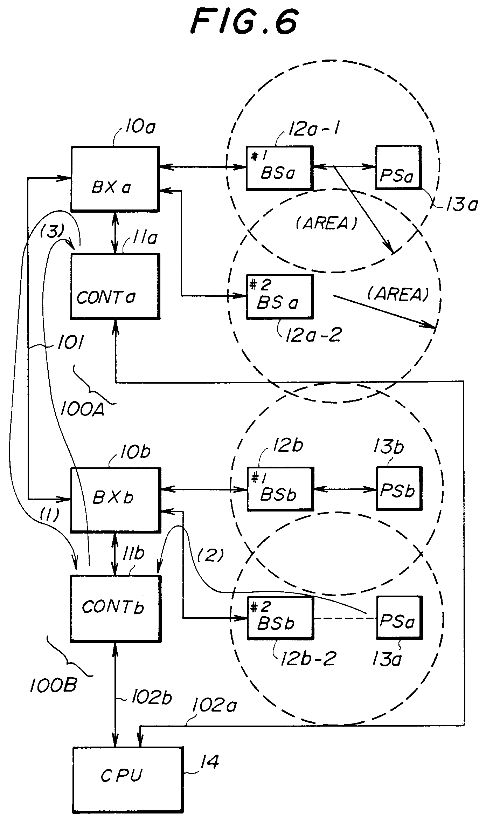

FIG.6 is a diagram for explaining the operation of the second embodiment when the portable station 13a which is registered for use within the portable telephone system 100A is used within the portable telephone system 100B. In FIG.6, those parts which are the same as those corresponding parts in FIG.5 are designated by the same reference numerals, and a description thereof will be omitted.

Information indicating that the portable station 13a is permitted to receive telephone services within the portable telephone system 100B is registered into the line control unit 11b within the portable telephone system 100B from the portable telephone system 100A, as indicated by an arrow (1) in FIG.6. For the sake of convenience, it will be assumed that the portable station 13a makes a call via the radio base station 12b-2 in this state, as indicated by an arrow (2). In this case, the line control unit 11b stores position information related to the portable station 13a and also notifies this position information to the line control unit 11a within the portable telephone system 100A. Thereafter, the call from the portable station 13a and the call to the portable station 13a are made via the radio base station 12b-2.

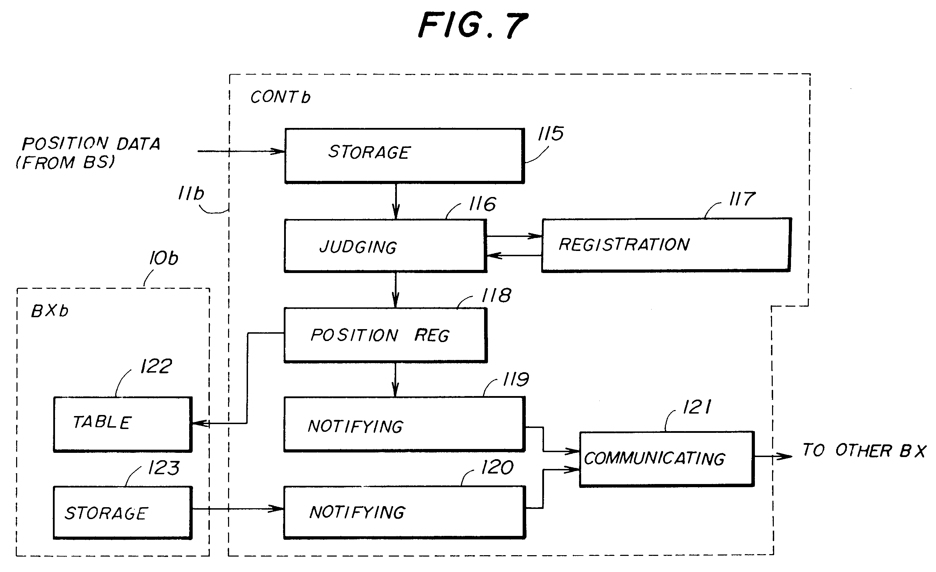

FIG.7 shows an embodiment of the line control unit used in the second embodiment, together with a part of the corresponding switching system. For the sake of convenience, it will be assumed that FIG.7 shows the line control unit 11b and the switching system 10b shown in FIGS.5 and 6.

The switching system 10b includes a connection table 122 and an accounting data storage 123. On the other hand, the line control unit 11b includes a position storage 115, a judging part 116, a registration part 117, a position register 118, a notifying part 119, a notifying part 120 and a communicating part 121 which are connected as shown.

The position storage 115 stores the present position of the portable station 13a in correspondence with process (2) described in conjunction with FIG.6. The judging part 116 judges whether or not a subscriber contract exists. The registration part 117 has a contract list which includes the PID number of the portable station 13a, in correspondence with the process (1) described in conjunction with FIG.6. Hence, when a call is made from the portable station 13a via the radio base station 12b-2, the judging part 116 judges whether or not the subscriber contract for the portable station 13a exists by making access to the PID number included in the contract list of the registration part 117.

The position register 118 obtains from the connection table 22 connection position information which indicates a connection terminal to which the call from the portable station 13a is connected in the switching system 10b. The notifying part 119 notifies the position information related to the portable station 13a to the portable telephone system 100A in which the portable station 13a is originally registered as a subscriber, via the communication part 121. Hence, the line control unit 11a within the portable telephone system 100A registers the information received from the line control unit 11b within the portable telephone system 100B, that is, the connection position information and the present position information which indicates that the radio base station 12b-2 is being used as a repeater.

The line control unit 11b is coupled to another switching system (not shown) via the communicating part 121 if necessary.

The notifying part 120 obtains the accounting data stored in the accounting data storage 123 within the switching system 10b, and in this case notifies this accounting data (accounting information) to the switching system 10a of the portable telephone system 100A via the communication part 121. The accounting information is related to the charges in respect of the use of the concerned switching systems, and is notified to the switching system 10a of the portable telephone system 100A in which the portable station 13a is originally registered as the subscriber.

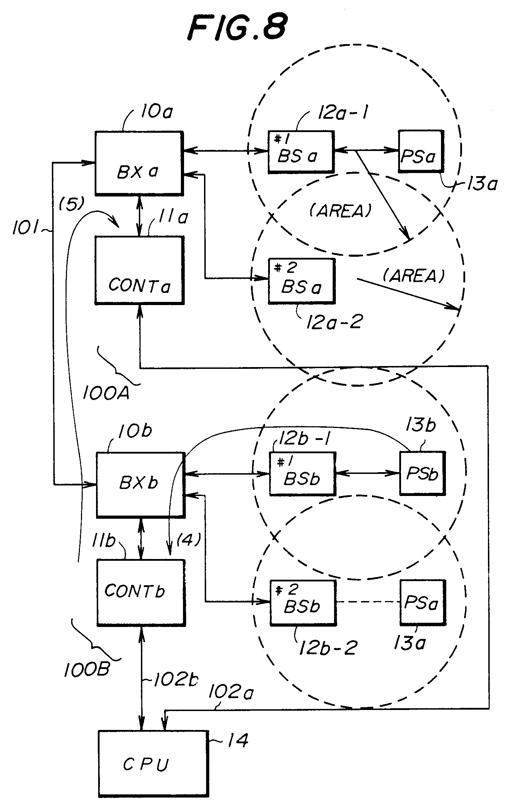

FIG.8 is a diagram for explaining the operation of the second embodiment when the user of the portable station 13a which is registered for use within the portable telephone system 100A borrows the portable station 13b within the portable telephone system 100B. In FIG.8, those parts which are the same as those corresponding parts in FIG.5 are designated by the same reference numerals, and a description thereof will be omitted.

Information indicating that the user of the portable station 13a has borrowed the portable station 13b within the portable telephone system 100B is notified to the line control unit 11b via the radio base station 12b-1, as indicated by an arrow (4) in FIG.8.

If the user notifies to the line control unit 11b a PID number which is different from the PID number assigned to the user (that is, the portable station 13a) within the portable telephone system 100A, the line control unit 11b holds this different PID number and notifies this different PID number to the line control unit 11a of the portable telephone system 100A when the user is a registered subscriber within the portable telephone system 100A. Alternatively, the user may notify the line control unit 11a within the portable telephone system 100A that he is borrowing the portable station 13b within the portable telephone system 100B.

Accordingly, the line control unit 11a of the portable telephone system 100A can recognize that the user of the portable station 13a registered as the subscriber in the portable telephone system 100A is borrowing the portable station 13b within the portable telephone system 100B and is receiving the telephone service under the PID number which is different from the PID number assigned to the user within the portable telephone system 100A, as indicated by (5) in FIG.8. The operation carried out thereafter is basically the same as that described above in conjunction with FIGS.6 and 7.

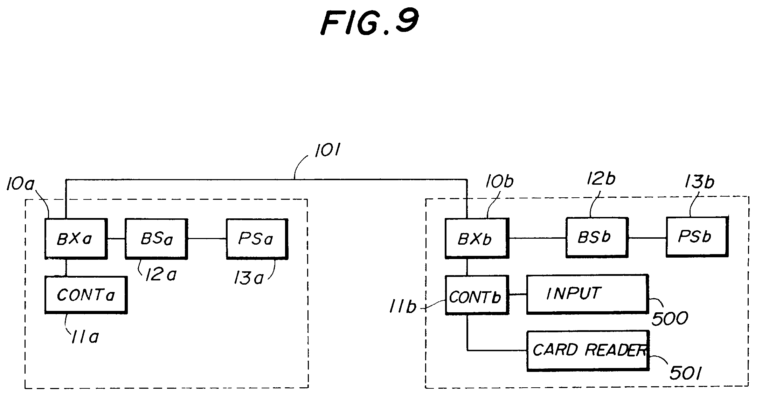

The user of the portable station 13a registered as the subscriber within the portable telephone system 100A and assigned a first PID number, for example, may input a second PID number which will be used when borrowing the portable station 13b within the portable telephone system 100B, in various manners. First, it is possible to input the second PID number from the portable station 13b. Second, it is possible to input the second PID number from an input device 500 shown in FIG.9. Third, it is possible to input the second PID number from the portable station 13b or the input device 500 together with a credit card number which is read from a credit card by a card reader 501 shown in FIG.9. In FIG.9, those parts which are the same as those corresponding parts in FIG.8 are designated by the same reference numerals, and a description thereof will be omitted.

According to the first and second methods described above, an unauthorized person may somehow obtain knowledge of the second PID number and illegally use the portable station 13b, because the second PID number simply needs to be input via the portable station 13b or the input device 500. For this reason, in order to prevent such an illegal use by an unauthorized person, it is preferable to use the card reader 501.

The card reader 501 reads a credit card or other types of cards owned by the user of the portable station 13a. The card reader 501 reads the credit card number from the credit card, and the line control unit 11b transmits this credit card number to the line control unit 11a of the portable telephone system 100A. The line control unit 11a prestores a table of credit card numbers of users who are authorized to use the communication system, and permits the use of the portable station 13b only if the credit card number is registered in the table.

If the PID number used within the portable telephone system 100A is also used by the user in the portable telephone system 100B when he borrows the portable station 13b, the line control unit 11a may store a table of the credit card numbers and the corresponding PID numbers assigned within the portable telephone system 100A. In this case, the line control unit 11a permits the use of the portable station 13b by the user only if the credit card number and the PID number are registered in the table. Of course, the credit card number may be input from the portable station 13b or the input device 500.

When the credit card number is notified to the line control unit 10a, the accounting process can be simplified because the charge which is calculated based on the accounting information received from the line control unit 10b may simply be charged to the credit card.

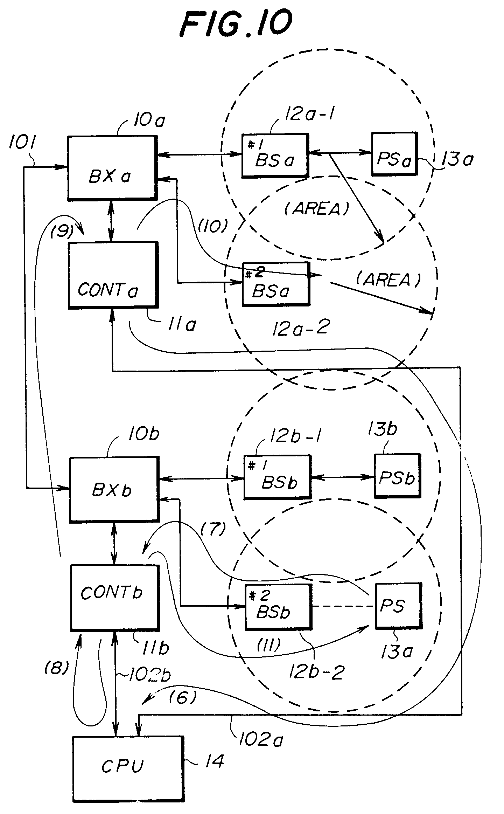

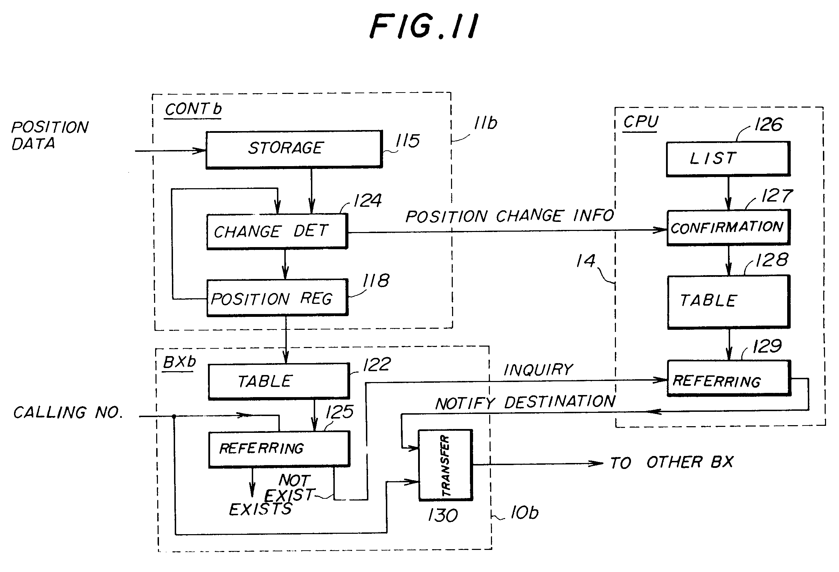

Next, a description will be given of a third embodiment of the communication system according to the present invention, by referring to FIGS.10 and 11. FIG.10 is a diagram for explaining the operation of the third embodiment, and FIG.11 shows an essential part of this embodiment. In FIGS.10 and 11, those parts which are the same as those corresponding parts in FIGS.1 through 8 are designated by the same reference numerals, and a description thereof will be omitted. In this embodiment, the information processing part 14 is utilized.

Information indicating that the portable station 13a is moved from the portable telephone system 100A to the portable telephone system 100B is notified to the information processing part 14. This information may be notified to the information processing part 14 from the portable station 13a in advance via the line control unit 11a and the communication line 102a as indicated by (6) in FIG.10.

For the sake of convenience, it will be assumed that the portable station 13a makes a call to a desired portable station (not shown) within the service area of the portable telephone system 100A as indicated by (7) in FIG.10. In this case, the line control unit 11b recognizes that the portable station 13a has called via the radio base station 12b-2, but since the portable station 13a is not a subscriber of the portable telephone system 100B and information related to the portable station 13a is not managed by the line control unit 11b, the line control unit 11b requests a search to the information processing part 14 via the communication line 102a as indicated by (8).

In response to the search request, the information processing part 14 notifies to the line control unit 11b information indicating that the portable station 13a is registered as a subscriber in the portable telephone system 100A, information indicating that the PID number of the portable station 13a is a PID number registered in the portable telephone system 100A, information indicating that the portable station 13a is located within the service area of the radio base station 12b-2, or the like, as indicated by (8) in FIG.10.

Based on the information received from the information processing part 14, the line control unit 11b notifies the line control unit 11a of the portable telephone system 100A that the portable station 13a is calling the desired portable station within the portable telephone system 100A from the service area of the radio base station 12b-2 within the portable telephone system 100B, as indicated by (9) in FIG.10. Then, the line control unit 11a recognizes that the desired portable station being called is located within the service area of the radio base station 12a-2 within the portable telephone system 100A, and calls the desired portable station, as indicated by (10) in FIG.10.

On the other hand, in the portable telephone system 100B, the line control unit 11b notifies the portable station 13a within the service area of the radio base station 12b-2 that the connection to the desired portable station has been made, as indicated by (11) in FIG.10.

In FIG.11, the line control unit 11b includes the position storage 115, a change detection part 124 and the position register 118. The switching system 10b includes the connection table 122, a referring part 125 and a transfer part 130. Furthermore, the information processing part 14 includes a list 126, a confirmation part 127, a table 128 and a referring part 129. A CPU may be used to carry out the various functions of the information processing part 127.

The change detection part 124 of the line control unit 11b detects a change in the position of the portable station 13a. Position change information related to the detected change is supplied from the change detection part 124 to the confirmation part 127 of the information processing part 14.

The referring part 125 of the switching system 10b refers to the contents of the connection table 122 when an instruction to call the portable station 13a is generated. The connection table 122 manages position information related to a plurality of portable stations based on the notification from the line control unit 11b.

The list 126 of the information processing part 14 manages authentic terminal information related to all of the portable stations which are registered and operable in all of the portable telephone systems, that is, within the communication system. The confirmation part 127 investigates the contents of the list 126 when the change detection part 124 detects the change in position of the portable station 13a and the position change information is received from the position change part 124, so as to confirm whether or not the portable station 13a is listed as an authentic portable station in the list 126.

The table 128 of the information processing part 14 stores information related to the positions of all of the portable stations within the communication system, that is, information related to the service area of radio base station 12i-j in which each portable station is located. The referring part 129 refers to the contents of the table 128 and investigates the destination to which the information is to be transferred. In other words, the referring part 129 obtains information related to which radio base station of which portable telephone system the information is to be transferred. Hence, when an inquiry is received from the referring part 125 of the switching system 10b, the referring part 129 notifies the destination to the transfer part 130 of the switching system 10b, and the transfer part 130 makes the necessary transfer of information.

In the second and third embodiments, the portable station which is used outside the portable telephone system in which the portable station is registered as a subscriber, may be used with the parent station of the cordless telephone as in the case of the first embodiment. In addition, the user of the portable telephone registered in the portable telephone system may borrow the cordless telephone instead of borrowing the portable station of another portable telephone system. In other words, the portable telephone system other than the portable telephone system in which the portable station is originally registered as the subscriber, may be the cordless telephone.

Moreover, when the information processing part 14 is provided, the CAI used between the radio base station and the portable station in the portable telephone system 100A may be different from that used in the portable telephone system 100B.

According to the second and third embodiments, the user of a portable telephone system may receive the telephone service in a different portable telephone system or a cordless telephone, and the flexibility of the communication system is improved. In addition, the accounting process can be made correctly regardless of the position of the user within the communication system.

Further, the present invention is not limited to these embodiments, but various variations and modifications may be made without departing from the scope of the present invention.

Reference signs in the claims are intended for better understanding and shall not limit the scope.

**Claims**

1. A parent station of a cordless telephone which has a portable station (13k) which communicates with the parent station (15), characterized in that said parent station comprises: first means (17-19) for transmitting and receiving information between the portable station (13k); and second means (20, 21), coupled to said first means and a public switched telephone network (104), for dialing an arbitrary telephone number, said first means using with respect to the portable station a common air interface (CAI) which is identical to a predetermined common air interface (CAI) employed by a predetermined communication system (100A) which includes at least one radio base station (12a-j) and at least one portable station (13a), so that the portable station (13a) of the predetermined communication system (100A) is compatible with the parent station (15).

2. The parent station of the cordless telephone as claimed in claim 1, characterized in that there is further provided third means (22-30), coupled to said first means (17-19), for receiving and transmitting a personal identification number which is assigned to the portable station (13a) of the communication system (100A) from the portable station (13a) and to the public switched telephone network (104).

3. A communication system characterized in that there are provided: a portable telephone system (100A) including at least a radio base station (12a-j), at least a first portable station (13a) which communicates with the radio base station, a switching system (10a) which is coupled to each radio base station, and a line control unit (11a) which is coupled to the switching system to control an operation of the switching system; a cordless telephone (15, 13k) including at least a parent station (15), and at least a second portable station (13k) which communicates with the parent station; and a public switched telephone network (104) which couples the switching system of the portable telephone system to the parent station of the cordless telephone, said parent station (15) using with respect to the second portable station (13k) a common air interface (CAI) which is identical to a predetermined common air interface (CAI) employed by each radio base station (12a-j) of the portable telephone system (100A), so that the parent station (15) is usable as a radio base station and the first portable station (13a) is compatible with the parent station.

4. The communication system as claimed in claim 3, characterized in that the parent station (15) includes means (17-19) for receiving and transmitting a personal identification number which is assigned to the first portable station (13a) of the portable telephone system (100A) from the first portable station (13a) and to the public switched telephone network (104).

5. The communication system as claimed in claim 4, characterized in that the line control unit (11a) of the portable telephone system (100A) includes first means for registering the personal identification number which is received from the parent station (15) together with information related to a telephone number of the parent station, and second means for automatically transferring a call to the first portable station (13a) when the personal identification number of the first portable station is registered in said first means.

6. The communication system as claimed in claim 5, characterized in that the line control unit (11b) of the portable telephone system (100A) further includes third means for cancelling the registered personal identification number in response to a cancel signal which is received from the parent station (15).

7. The communication system as claimed in claim 6, characterized in that the parent station (15) includes means for calling the first portable station (13a) at a predetermined period, and means for automatically sending the cancel signal to the line control unit (11a) of the portable telephone system (100A) when no answer is received from the first portable station in response to the periodic calling.

8. The communication system as claimed in any of claims 3 to 7, characterized in that the switching system (10a) of the portable telephone system (100A) is a private branch exchange.

9. The communication system as claimed in any of claims 3 to 8, characterized in that the parent station (15) includes means for sending accounting information related to the first portable station (13a) to the line control unit (11a) of the portable telephone system (100A).

10. A communication system characterized in that there are provided: a first portable telephone system (100A) including at least a first radio base station (12a), at least a first portable station (13a) which communicates with the first radio base station, a first switching system (10a) which is coupled to each first radio base station, and a first line control unit (11a) which is coupled to the first switching system to control an operation of the first switching system; a second portable telephone system (100B) including at least a second radio base station (12b), at least a second portable station (13b) which communicates with the second radio base station, a second switching system (10b) which is coupled to each second radio base station, and a second line control unit (11b) which is coupled to the second switching system to control an operation of the second switching system; and a public switched telephone network (101) which couples the first and second switching systems of the first and second portable telephone systems, said second radio base station (12b) including means for receiving and transmitting a personal identification number which is assigned to the first portable station (13a) of the first portable telephone system (100A) from the first portable station and to the public switched telephone network (101).

11. The communication system as claimed in claim 10, characterized in that the second radio base station (12b) uses with respect to the second portable station (13b) a common air interface (CAI) which is identical to a predetermined common air interface (CAI) employed by each first radio base station (12a) of the first portable telephone station (100A), so that the first portable station (13a) is compatible with the second radio base station (12b) of the second portable telephone system (100B).

12. The communication system as claimed in claim 11, characterized in that the first line control unit (11a) of the first portable telephone system (100A) includes first means for registering the personal identification number which is received from the second radio base station (12b) together with information related to a position where the first portable station (13a) is used, and second means for automatically transferring a call to the first portable station when the personal identification number of the first portable station is registered in said first means.

13. The communication system as claimed in claim 12, characterized in that the first line control unit (11a) of the first portable telephone system (100A) further includes third means for cancelling the registered personal identification number in response to a cancel signal which is received from the second radio base station (12b).

14. The communication system as claimed in claim 13, characterized in that the second radio base station (12b) of the second portable telephone system (100B) includes means for calling the first portable station (13a) at a predetermined period, and means for automatically sending the cancel signal to the first line control unit (11a) of the first portable telephone system (100A) when no answer is received from the first portable station in response to the periodic calling.

15. The communication system as claimed in any of claims 11 to 14, characterized in that the first and second switching systems (10a, 10b) of the first and second portable telephone systems (100A, 100B) are private branch exchanges.

16. The communication system as claimed in any of claims 11 to 15, characterized in that the second line control unit (11b) of the second portable telephone system (100B) includes means for sending accounting information related to the first portable station (13a) to the first line control unit (11a) of the first portable telephone system (100A).

17. The communication system as claimed in claim 11, characterized in that the second line control unit (11b) of the second portable telephone system (100B) includes first means for registering the personal identification number which is received from the second radio base station (12b) together with information related to a position where the first portable station (13a) is used, and second means for automatically transferring a call to the first portable station when the personal identification number of the first portable station is registered in said first means.

18. The communication system as claimed in claim 17, characterized in that the second line control unit (11b) of the second portable telephone system (100B) further includes third means for enabling a call from the first portable station (13a) via the second radio base station (12b) only if the personal identification number of the first portable station is registered in said first means.

19. The communication system as claimed in claim 11, characterized in that the second line control unit (11b) of the second portable telephone system (100B) includes first means for registering the personal identification number which is received from the second radio base station (12b) together with information related to a position where the second portable station (13b) is used under the personal identification number of the first portable station (13a), and second means for automatically transferring a call to the second portable station when the personal identification number of the first portable station is registered in said first means.

20. The communication system as claimed in claim 19, characterized in that the second line control unit (11b) of the second portable telephone system (100B) further includes third means for enabling a call from the second portable station (13b) under the personal identification number of the first portable station (13a) via the second radio base station (12b) only if the personal identification number of the first portable station is registered in said first means.

21. The communication system as claimed in claim 10, characterized in that the second radio base station (12b) uses with respect to the second portable station (13b) a common air interface (CAI) which is different from a common air interface (CAI) employed by each first radio base station (12a) of the first portable telephone station (100A).

22. The communication system as claimed in claim 21, characterized in that there are further provided: information processing means (14); and communication lines (102a, 102b) coupling the first and second line control units (11a, 11b) of the first and second portable telephone systems (100A, 100B) to the information processing means, said information processing means (14) managing information related to positions of each of the first and second portable stations (13a, 13b).

23. The communication system as claimed in claim 22, characterized in that the first and second line control units (11a, 11b) respectively include first means for registering personal identification numbers of the first and second portable stations (13a, 13b) which may be used in a corresponding one of the first and second portable telephone systems (100A, 100B), and second means for making an inquiry to the information processing means (14) as to whether or not to enable use of a certain portable station in the corresponding one of the first and second portable telephone systems when the first means includes no personal identification number of the certain portable station.

EP 0 504 795 A2

# FIG.1

FIG.2

# FIG.3

STATION 13k

RADIO RECEIVER

RADIO TRANSMITTER

17

18

FROM CKT 27

19

CONTROL SIGNAL RECOGNITION

RESET

TIMER

32

SET

CENTER PROCESS TERMINATION RECOGNIZING

30

DISPLAY

31

TEL

16

21

AUTO DIALING

STORAGE

20

22

STORAGE

23

STORAGE

SEL

24

25

STORAGE

26

STORAGE

DET

27

SYNTHESIZING & TRANSMIT

28

TO PART 18

SW

29

NETWORK 104

15

EP 0 504 795 A2

FIG.4

13

39

40 DUPLEXER

41 TRANSMITTER

42 RECEIVER

43 CONTROL

43a PROCESSOR

43b MEM

44 OPERATION

45 DISPLAY

46 HANDSET

# FIG.5

# FIG.6

# FIG. 7

EP 0 504 795 A2

POSITION DATA
(FROM BS)

CONTb

STORAGE — 115

11b

JUDGING — 116

REGISTRATION — 117

10b

BXb

POSITION REG — 118

TABLE — 122

NOTIFYING — 119

COMMUNICATING — 121

TO OTHER BX

STORAGE — 123

NOTIFYING — 120

# FIG.8

# FIG.9

# FIG.10

# FIG.11

EP 0 504 795 A2